# EUROPEAN PATENT SPECIFICATION

(11) **EP 2 053 850 B1**
(45) Date of publication and mention of the grant of the patent: **29.06.2011**
(21) Application number: 08167336.0
(22) Date of filing: 22.10.2008
(51) Int. Cl.: H04N 5/44, H04N 5/445, H04N 5/57, H04N 5/45, H04S 7/00, G06F 3/01

(54) **Changing the parameters of a video system according to the position of a user relative to such video system**
Änderung der Parameter eines Videosystems gemäß der relativen Position des Benutzers zu solch einem Videosystem
Modification des paramètres d'un système vidéo selon la position d'un utilisateur associé à un tel système vidéo

(30) Priority: 26.10.2007 TR 200707352
(43) Date of publication of application: 29.04.2009
(73) Proprietor: Vestel Elektronik Sanayi ve Ticaret A.S., 45030 Manisa (TR)
(72) Inventor: Üge, Y. Emre, 45030 Manisa (TR); Agbaba, Güngör, 45030 Manisa (TR); Ikizler, Anil, 45030 Manisa (TR); Alimi, Hasan, 45030 Manisa (TR); Arslan, Ilker, 45030 Manisa (TR); Boran, Baris, 45030 Manisa (TR)
(74) Representative: Cayli, Hülya

(56) References cited:
- EP-A- 1 426 919
- EP-A- 1 635 613
- JP-A- 1 109 867
- JP-A- 1 290 385
- US-A- 5 576 732
- US-A1- 2005 012 862
- US-A1- 2005 243 212

## Description

### Field of Invention

The present invention relates to a method and system of altering the video and audio parameters according to the distance and positioning of user relative to the video system and particularly to LCD (Liquid Crystal Display) televisions.

### Prior Art

Video systems and particularly the televisions are being used in user's electronic market for many years and have been developed in time with respect to their video quality. Particularly the image problems encountered in LCD televisions have quite been improved.

Video parameters such as brightness, contrast, sharpness of most of the current televisions are preset by manufacturers for improving the video quality based on the assumption that the user of such television is located at a predetermined distance to the television. Television manufacturers previously set the video parameters on the televisions for a single distance only (e.g. one meter distance) assuming that the users watch the television from a fixed distance, such that, unfortunately, when the user watches the television from a distances out of this predetermined one, the video quality perceived by the user lowers down. When an LCD television, for instance, of which the video parameters are set for viewing from a five-meter distance, is watched from a closer location than the preset distance for longer periods of time, the video parameters such as the brightness, gamma, contrast etc. previously set for viewing from such five-meter distance may seriously disturb the user's eye. Additionally, many of the video parameters in video systems assume the user's angle of watching the television as perpendicular, and omit the user's positioning (e.g. to the right or left of the television) with respect to the video system.

Even if the user can make adjustments on the video parameters independent from closeness to or farness from the television, he/she fails in making changes on some complex video parameters in many television systems quite often. One of the reasons for this is that certain adjustments are very difficult to be made individually by the user, and if they are made, it is kept high the level of benefiting from the product with respect to the user by giving no options to the user for making broad interrelated changes and by keeping the selections to be made by the user below a reasonable level. Although the users can make changes on the video parameters such as brightness, contrast, sharpness etc., when it comes to make changes on the video parameters according to the distance between themselves and the video, they neither know as to which video parameters are to be changed, nor to what extent these have to be changed.

In the document US5488434A1 is disclosed the automatic changing of the video system parameters based on the perpendicular distance of the user watching such video system to the latter, on the illumination of the ambiance, and on other parameters, but even the distance of the users to the video system can be estimated according to the prior art, disregarding the circumstance in which more than one person may be present for watching the video system, and the capability of the television system for making the adjustments only with respect to the user who controls the remote control reduce the level of benefitting from the video system with respect to the users. The distance of the user to the video system is determined by a quite complex and inaccurate method according to the prior art, and the positioning of the user (i.e. to the right or left of the video system) is not taken into account.

In the document US5576732A, a dynamic image display device which successively reads out each frame from dynamic image data stored as successive frames to display each of the frames at each predetermined display period on a window of a display device is described. During described process, only the distance parameter between display screen and person is inputted as shown in figure 18 in US5576732A. However, position information of the user in 3D space and position information of the display system in a certain area entered by the user is not discussed in US5576732A,

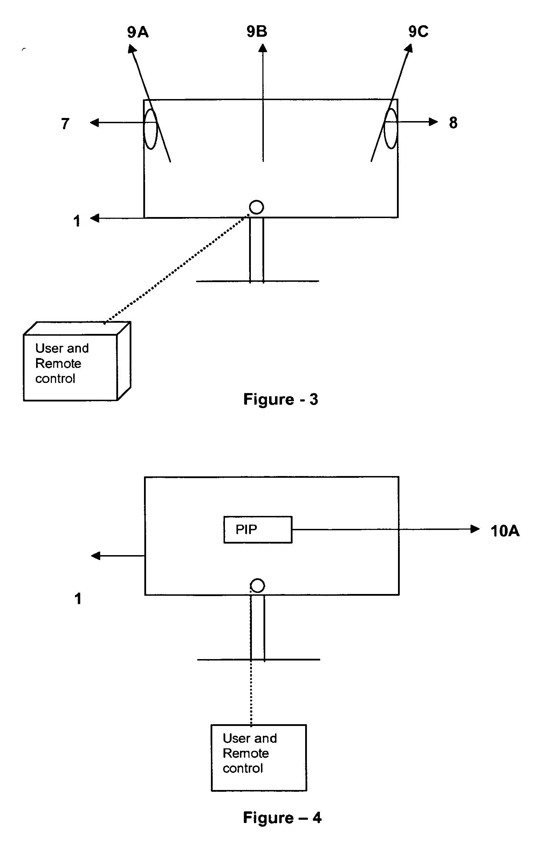

The display modes provided for the users are also adjusted by the manufacturers based on the assumption that the user views the video system from a certain distance. Nowadays many television systems, for instance, allow the users to view another program by means of a small window on the display as they already watch a program (i.e. the PIP, the picture in picture feature), but the size of the PIP display is also previously set by the manufacturer. Even if the users can change the size and position of the PIP window on the display in some systems, the feature of adjusting the size and position of the PIP window according to the distance and location of the user with respect to the video system shall provide a substantial convenience. For instance, a system is illustrated in Figure 4 for referring to the prior art. When the PIP window is activated in this system, the PIP window appears on a fixed position and fixed size on the display as previously determined by the manufacturer, and the user is enabled to change the size and position on the display of the PIP window.

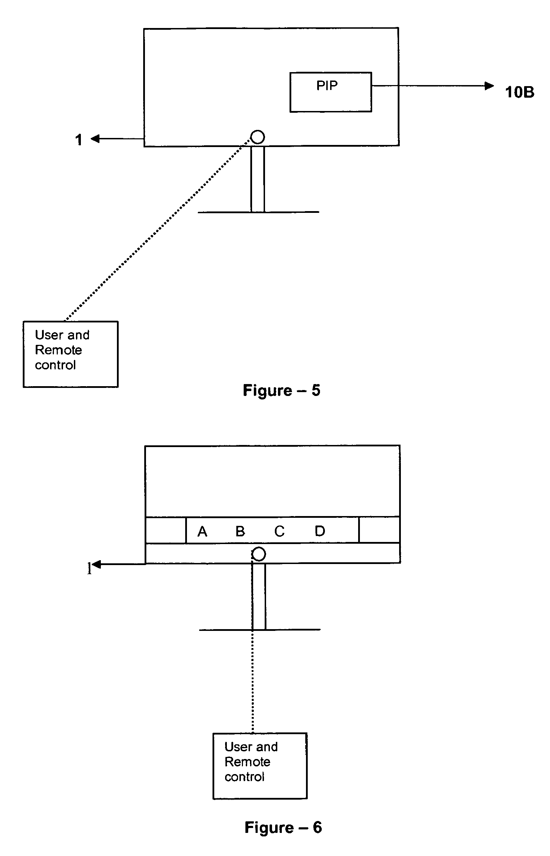

Another video mode provided for the users is the zoom mode. According to the prior art, the users depress a previously-assigned key on the remote control in this video mode so that the video viewed by the user is zoomed in at a previously-determined rate, or the users determine the extent of zooming in by means of the remote control. The 'zooming in' feature gains importance while the subtitles displayed on the video system are enlarged. The technique by which the video is zoomed in with the activation of the zoom-in feature according to the prior art is illustrated in Figure 6. The "A B C D" characters are illustrated in en enlarged subtitle in Figure 6. With the activation of the zoom-in feature, such characters are zoomed in based on previously-set values of the zoom-in mode, but the distance and position of the user are omitted. The zoom-in feature to be conducted by taking into account the user's position relative to the video system shall be very advantageous for the user.

Even if the user can change the video parameters in line with his/her own preferences, the automatic performance of the adjustment of the zoom-in feature according to the location (i.e. distance and position) of the user relative to the video system being watched shall bring a substantial advantage to the user.

Whilst the users can change the audio settings of the video system by themselves, the automatic changing of the audio parameters such as the volume, bass, etc. with respect to the distance and position of the users to the video system shall provide a substantial advantage to the users.

The document EP1635613A describes an audio-visual system and timing method senses the location of a user and provides optimum sound quality. Said system is controlled by a remote control and by using said remote control, automatically detects the user location and position. According to detected position and location, sound and position of speakers are auto-adjusted. Detection of user location and position is done by automatically detecting the remote control position and location by the system. Detecting the remote control position and location is not suitable for the condition of presence of more than one user. Moreover, only sound adjustments are covered in EP1635613A.

### Brief Description of Invention

The present invention relates to the automatic changing of the video and audio parameters of a video system according to the distance and/or position of the user relative to the video system that can be controlled by means of a remote control and to surpassing the relevant problems of the prior art.

### Objective of Invention

The objective of the present invention is to provide the changing of a multiple number of video parameters, which are controllable or uncontrollable by the users, according to the determined distance(s) and/or position(s) of the user/users relative to a video system controllable by means of a remote control, by defining on the video system the distance(s) and position(s) of the user(s) relative to the video system.

The objective of the present invention is to provide the changing of a multiple number of audio parameters, which are controllable or uncontrollable by the users, according to the determined distance(s) and/or position(s) of the user/users to such video system controllable by means of a remote control, by defining on the video system the distance(s) and position(s) of the user(s) relative to the video system.

Another objective of the present invention is to provide the automatic adjustment of the size and/or position of the PIP (picture in picture) window on the display of such video system according to the distance and position the user is present at.

A further objective of the present invention is to provide the automatic adjustment of the zoom-in feature used in such video systems according to the distance and position the user is present at.

### Description of Figures

The present invention is to be disclosed hereunder with references made to annexed figures outlined as following:
Figure 1 is a block diagram illustrating the menus on the video system for allowing the user to enter his/her position and position information relative to the LCD television set in which the present invention is implemented.
Figure 2 is a block diagram illustrating the menus on the video system for allowing a multiple number of users to enter their positions and position information relative to the LCD television set in which the present invention is implemented.
Figure 3 is a block diagram illustrating at which points the adjustments on the video system are made according to the information entered by the user in Figure 1 as required by the present invention.
Figure 4 is a block diagram illustrating the activation of the PIP window by the user on an LCD television set according to the prior art.
Figure 5 is a block diagram illustrating the change of the PIP window with respect to the user's location according to the present invention.
Figure 6 is a block diagram illustrating the activation of the zoom-in mode by the user according to the prior art.
Figure 7 is a block diagram illustrating the change of the zoom-in window with respect to the user's location according to the present invention.
Figure 8 is a block diagram illustrating the customization menu for the video and audio parameters by which the user customizes the preferred video parameters to be applied with respect to his/her location.
Figure 9 is a block diagram illustrating a menu for customizing the position and size of the PIP window on the display with respect to the location of user according to the present invention.

### Description of Invention

The basic task of the present invention is to enhance the user's satisfaction from the video system according to the distance and position of the user relative to said system in the video system, which is controllable by means of a remote control.

According to the operation principle of the present invention, the user communicates to the video system his/her distance and position relative to said system by means of the remote control, such that a system within the video system which adjusts the video and audio parameters thereof becomes enabled to apply previously-set video and audio parameters according to the determined location of such user. A menu is provided on the video system, which activates the user and enters his/her distance and position information for changing the video parameters.

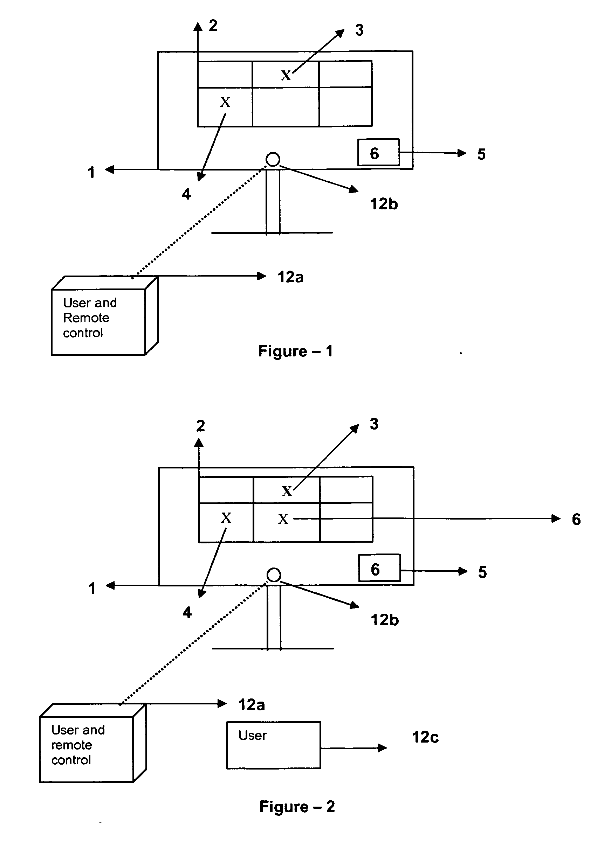

According to the operation principle of the present invention, the user depresses a previously-determined key on the remote control, and activates a menu according to the present invention, on the video system, which allows the user to enter the distance and position information. On such previously-set menu is provided a menu at a certain area for entering the user's distance and position relative to the video system. In addition to the menu on this menu by which the position of the video system can be defined for a certain area, it is also possible that the user can define his/her own position for a certain area on the same menu. Thus, a menu example is given in Figure 1 by which the user can define his/her own distance and position relative to the video system.

As illustrated in Figure 1, the menu activated by the user on the video system by means of the remote control allows the user to make selection through a previously-set menu for a certain area where the video system and user are present. This menu is previously loaded onto a nonvolatile memory in the video system by the manufacturer. This menu, by which the user is enabled to enter his/her distance and position information relative to the video system, may comprise more than one submenus, and more than one menu may be created according to the area in which the television system is to be used. For instance, such more than one menu, by which the user may define his/her position relative to the video system, can be previously loaded by the manufacturer to the video system. In such menus, the user can both define his/her position relative to the video system, and also define the position of the video system for a certain area (e.g. previously-defined rooms). On the video system (the video system in this example is an LCD television and designated as "1") illustrated in Figure 1 is activated the menu designated as "2" and found as a result of the selection of the user made according to the area in which the video system is present. A menu composed of two rows and three columns is provided on the menu for illustrating and exemplifying the present invention. The first row is used for selecting the system's position and the second column for defining the user/users position(s). In this example, the user at position "12a" transmits signals by means of a remote control to communicate to the video system the position where he/she is present, whereas the receiver element (12b) on the video system receives the signals sent from the remote control and transmits them to the video system. In the case illustrated in Figure 1, the user defines the video system's position at the center (3) and his/her own position at the left (4) relative to the video system. After the user defines his and the video system's position on the same menu, he/she can define his/her distance to the video system at the same menu or on a menu (5) for entering the distance information. The video system which detects the position and distance of the user/users relative to itself can change the video and/or audio parameters according to previously-set rules. For the example given in Figure 1, the user selects the area "4" and chooses a single user position, and enters his/her distance to the video system via the menu for entering the distance information (5). (It is 6 meters for this example) The video system, which detects that a single person is present and that such single person is at the left of the video system by a distance of six meters, activates previously-set video and audio parameters, which are previously loaded by the manufacturer on a nonvolatile memory for the case in which the user is at the left and at a distance of six meters to the video system. In the example illustrated in Figure 1, for instance, the system, of which the video and audio parameters are previously set for a one-meter distance, can increase the video parameters such as the sharpness, contrast, etc. which are preferred to be relatively higher with the distance increasing, according to the distance and position of the user relative to the video system, and can change the volume output according to such distance and position.

The user/users can simplify the menu illustrated in Figure 1 and can enter the distance information (5) except the position information so that the video and audio parameters are changed only according to the distance criterion. The user may enter his distance relative to the video system directly to the menu "5", or may communicate his distance to the video system by using some previously-assigned keys (e.g. volume +,-) on the remote control.

If there is present more than one person, the positions of more than one person may be entered by means of the menu "2" according to the present invention. As illustrated in Figure 2 as well, for instance, it may be defined that persons are present at areas "4" and "5", and in this case, video parameters, such as the sharpness, contrast, etc., which are preferred to be relatively higher with the distance increasing according to the users' distance and position, are increased, and the volume output can be changed depending on such distance and position.

For the case in which the position of the user relative to the video system is defined as given in Figure 1, the effects of the automatic adjustments made by the video system on the video display and on the audio system connected to the video system shall be disclosed in Figure 3. In this case the video system changes the video and audio parameters according to previously-loaded rules which change the video and audio parameters. It is possible in LCD televisions to make different video parameter adjustments on different zones on the video display and in Figure 3, the zones referred to as 9A, 9B, and 9C on the video system's display have different video characteristics thanks to the operation principle of the present invention. The user, whose position and location relative to the video system are determined according to the information entered in Figure 1, is relatively more closer to the left of the video system in this example; therefore both the video parameters such as sharpness, contrast, etc. can be changed according to the distance entered by the user, and different video parameters can be applied on the zones of the display referred to as "9A", "9B", and "9C". Since, for instance, the user is at the left relative to the video system in the example given in Figure 1, the zone "9A" given in Figure 3 shall be relatively closer to the user, whereas the zone "9C" be relatively farther. Therefore the video parameters at the zones "9A" and "9C" may differ from each other. The contrast and sharpness values applied to the zone "9B", for instance, may be higher than the contrast and sharpness values applied to the zone "9A". It should be kept in mind that the individual rules applying such video parameters on the related zone of the display according to the position and locations of user/users are previously determined, and that the zones 9A, 9B, and 9C on the display are given for illustration purposes for making clear the operation principle of the present invention, and that the number of such zones may be altered and not be restricted to three.

When more than one user is defined, changes are made on the video system according to the rules of changing the video parameters in line with previously-loaded position and locations of users, similar to the case given in Figure 2. When, for instance, such more than one person are present at the left and center with respect to the video system as illustrated in Figure 2, the zones "9A" and "9B" among the zones "9A", "9B", and "9C" on the video display of Figure 3 shall be relatively closer to the users than the zone "9C" and the adjustments of the video parameters shall be changed accordingly, e.g. the video parameters such as sharpness, contrast, etc. of the zone "9C" shall be increased as compared to those parameters of the zones "9A" and "9B". It should be also kept in mind that the rules maintained on a nonvolatile memory on how to change the video parameters according to the user/users' positions and distances can also be altered by such users. When the user is closer to the video system, he/she may request not to decrease, but to increase the sharpness. In this case, the user/users define(s) how the video parameters can be set according to his/her/their distance(s) and position(s) on a preloaded menu according to the present invention, and such adjustments are saved on a nonvolatile memory and are accepted as applicable rules on how to change the video parameters.

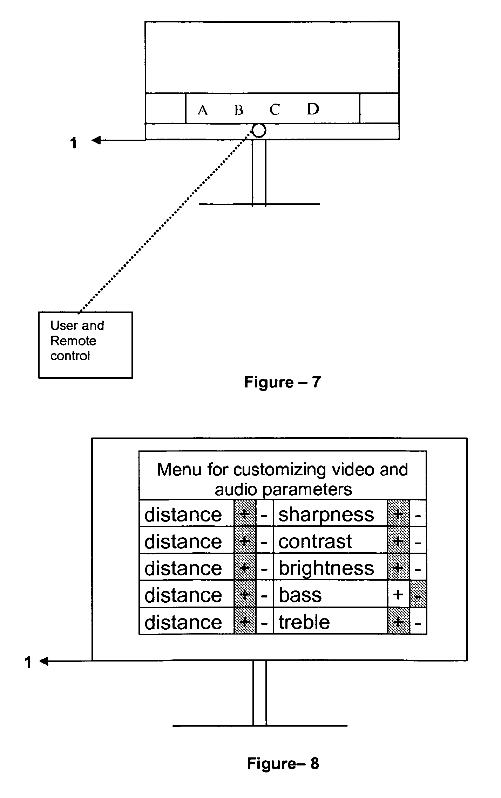

As mentioned above, it is also possible to change the volume output and the audio attributes, such as the bass, treble, etc. indicated as "7" and "8" in Figure 3 according to the position and location of the user illustrated in Figure 1. With respect to the distance and position of the user/users relative to the video system as exemplified in Figure 1 or Figure 2, the volume output of the speaker (7) in Figure 3 can be set slightly higher than that of the other speaker (8). This is done because a user being at the left in Figure 1 shall be closer to the speaker "7" than to the speaker "8". Once the position and distance information of the user/users relative to the video system in Figure 1 or Figure 2 are received thanks to the present invention, the audio outputs can be altered according to position-based rules of changing the audio output parameters. Previously-loaded area structures (e.g. a forty square meter room or a thirty square meter room) may be provided on the menu (2) by which the user enters his/her own position and the position of the video system as illustrated in Figure 1 according to the present invention, and the user may be asked to select the structure among those structures which mostly resembles the area in which his/her video system is present. Thus, once the user communicates to the video system the distance and position information by means of a remote control, the audio parameters can be altered by taking into account the room's structure as well. When, for instance, a room with a longer width and narrower length structure shape is selected, the audio adjustment can be conducted so as to reduce echoing while the audio settings are made according to the position and distance of the user. The user/users may activate a menu like the one illustrated in Figure 8 by depressing a key previously assigned on the remote control and may define via this menu as to how the video parameters are to be altered according to the position and distance of user/users relative to the video system. Referring to the example in Figure 8, the user may select the "+" or "-" keys on the menu, respectively for "increasing" or "decreasing" the preferences. In this example, when the distance is increased, the user selects to increase the parameters such as sharpness and contrast and to decrease the audio attributes such as the bass. The user/users may not want to change the settings made by the manufacturer and in this case the settings made by the manufacturer are accepted as applicable.

Thanks to the operation principle of the present invention, it is also possible to automatically change the size and position of the PIP display according to the position and distance of the user/users relative to the video system. As differing from the prior art illustrated in Figure 4, Figure 5 illustrates how the PIP window on a video system making use of the present invention is changed according to the user's position distance relative to the video system given in Figure 1. With respect to the operation principle of the present invention and assuming that the position(s) of the user/users relative to the video system being watched is/are as illustrated in Figure 1, the video system, which detects that the user is present at a certain distance and to the left of itself, changes the size and position of the PIP window according to the rules previously loaded by the manufacturer on a nonvolatile memory. The approach is illustrated in Figure 5, of how the size of the PIP window being watched and its position on the video system's display are changed according to the position and distance information given in Figure 1. The size of the PIP window in Figure 5 is enlarged according to the distance information previously entered by the user, and since the user is located at the left with respect to the video system, the PIP window is dislocated to the right of the display for providing a convenient view. The user aiming to activate the PIP display according to the present invention first enters the position and distance information and when he/she depresses a previously-assigned key on the remote control for activating the PIP window, the size of the PIP window and its position of the display is adjusted automatically. When there is more than one user and once they communicate to the video system their positions and distances relative to the video system as illustrated in Figure 2, the size and position of the PIP window on the display are automatically changed according to the rules saved on a nonvolatile memory of the video system.

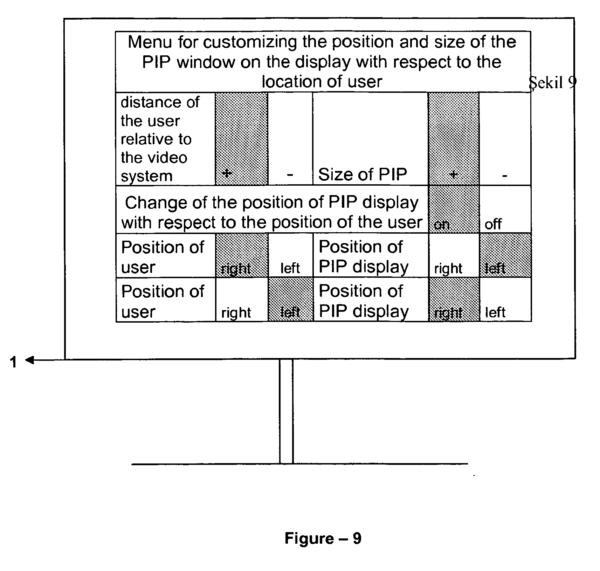

Thanks to the operation principle of the present invention, the zoom-in feature of the video system can be activated and the zooming-in value can be changed automatically according to the position and distance of the user relative to the video system. A system according to the prior art is illustrated in Figure 6, whereas the system according to the present invention is illustrated in Figure 7. With respect to the operation principle of the present invention and assuming that the position(s) of the user/users relative to the video system being watched is/are as illustrated in Figure 1, the video system, which detects that the user is present at a certain distance and to the left of itself, can automatically change the size and position of the zoomed-in image/video according to position-based zooming-in rules loaded on a nonvolatile memory. The manner how zooming-in is performed on a video system being watched according to the position and distance information as illustrated in 1 shall be disclosed by referring to Figure 7. The zoom-in mode given in Figure 7 is changed according to the position and distance information entered previously by the user; the zoomed-in zone is enlarged differently from known techniques for providing a convenient viewing by taking into account that the user is present at the left with respect to the video system and by taking into account the user's distance to the video system, and the size of this zoomed-in zone is increased towards the right of the video (the letter "D" seen on the display is larger than the letter "A"). The user aiming to activate the zoom mode thanks to the present invention first enters the position and distance information and when he/she depresses a previously-assigned key on the remote control for activating the zoom mode, the zooming rate is adjusted automatically thanks to the present invention. When there is more than one user and once they communicate to the video system their positions and distances relative to the video system as illustrated in Figure 2, the image of the zoom-in mode on the display is automatically changed according to the rules saved on a nonvolatile memory of the video system. The user/users can define the rules which determine how the size and position of the PIP window are changed and how zooming-in is made. For instance, the user/users may not want to change the position of the PIP window on the video system's display, but only the size of the PIP window according to their positions and distances relative to the video system and any such entered/defined rules may be accepted as applicable rules. The user/users may activate a menu for customizing the PIP window according to the user's location, like the one illustrated in Figure 9, by depressing a key previously assigned on the remote control and may define via this menu as to how the PIP window is to be altered according to the position and/or distance of user/users relative to the video system. Referring to the example in Figure 9, the user may select the "+" or "-" keys on the menu, respectively for "increasing" or "decreasing" the preferences. In this example, the user selects to increase the size of the PIP window with the distance increasing and selects the automatic position changing of the PIP window on the video system's display according to the user's distance and position information as "active"; and defines the position of the PIP window on the video system's display according to the positions of users. The menus illustrated in bold indicates that these are the activated, i.e. selected menus. The user/users may not want to change the settings made by the manufacturer and in this case the settings made by the manufacturer are accepted as applicable. Even though it is not comprised in the present invention, a menu on how to perform the zoom-in mode can be prepared as illustrated in Figure 9, so that the user is given the opportunity of defining the manner of making the zoom-in mode.

According to the present invention the user transmits meaningful signals to the video device by depressing a previously-assigned key on the remote control and these meaningful signals are received by the video system. These meaningful signals received by the video system are detected by the microprocessor of the video device. The microprocessor evaluating the signals transmitted from the remote control and representing the distance of the user to the video system calls the video and audio parameters associated with the user's distance information according to the previously-loaded rules and changes the current video and audio parameters. The information on how the video parameters are changed according to the distance of the user to the video system can be maintained on a memory of the video system or be maintained on the internal memory of the microprocessor of the video system.

The present invention is capable of changing the video and audio quality perceived by the user/users according to the position and/or distance of such user/users relative to the video system and can be used in all video systems comprising an audio system.

## Claims

1. A method for automatically controlling the video and/or audio parameters of a video system which is controlled by a remote control and comprising at least one audio output, according to the positions of at least two users (12a, 12c), **characterized in that**
● said video system comprises a menu for entering position information defining said positions (4,6) by using the remote control (12a),
● the video system receives (12b) the position information transmitted by the remote control and determines the positions of the users (4,6) relative to the video system
● the video system changes the audio and/or video parameters according to said information defining said positions (4,6) of said at least two users (12a, 12c), whose positions are detected by means of a position-based rule, stored in a memory of the video system, of changing the audio/video parameters.

2. A method according to Claim 1, **characterized in that** position information for more than one user is transmitted to said menu for entering position information.

3. A method according to Claim 1, **characterized in that** said position-based rule of changing the audio/video parameters is previously determined by the manufacturer.

4. A method according to Claim 1, **characterized in that** said position-based rule of changing the audio/video parameters is determined by the user.

5. A method according to Claim 1, **characterized in that** said menu for entering said information defining said positions of said at least two users (12a, 12c) is composed only of the menu for entering distance (5) information.

6. A method according to Claim 1, **characterized in that** said menu for entering said information defining said positions (4,6) of said at least two users (12a, 12c) is composed of the menu for entering distance (5) and position (2) information.

7. A method according to Claim 1, **characterized in that** said menu for entering said information defining said positions (4,6) of said at least two users (12a, 12c) comprises more than one menu for entering position (2) information.

## Patentansprüche

1. Verfahren zum automatischen Steuern der Video- und/oder Audioparameter eines Videosystems, das durch eine Fernsteuerung gesteuert wird und mindestens einen Audioausgang umfasst, entsprechend den Positionen von mindestens zwei Benutzern (12a, 12c), **dadurch gekennzeichnet, dass**
● das Videosystem ein Menü umfasst, um Positionsinformation, die die Positionen (4, 6) definiert, unter Verwendung der Fernsteuerung (12a) einzugeben,
● das Videosystem die von der Fernsteuerung übertragene Positionsinformation empfängt (12b) und die Positionen(4, 6) der Benutzer in Bezug auf das Videosystem bestimmt,
● das Videosystem die Audio- und/oder Videoparameter entsprechend der Information, die die Positionen (4, 6) der mindestens zwei Benutzer (12a, 12c) definiert, deren Positionen erfasst werden, mittels einer in einem Speicher des Videosystems gespeicherten positionsbasierten Regel zum Ändern der Audio-/Videoparameter ändert.

2. Verfahren nach Anspruch 1, **dadurch gekennzeichnet, dass** Positionsinformation für mehr als einen Benutzer an das Menü übertragen wird, um Positionsinformation einzugeben.

3. Verfahren nach Anspruch 1, **dadurch gekennzeichnet, dass** die positionsbasierte Regel zum Ändern der Audio-/Videoparameter vorab durch den Hersteller bestimmt wird.

4. Verfahren nach Anspruch 1, **dadurch gekennzeichnet, dass** die positionsbasierte Regel zum Ändern der Audio-/Videoparameter durch den Benutzer bestimmt wird.

5. Verfahren nach Anspruch 1, **dadurch gekennzeichnet, dass** das Menü zur Eingabe der Information, die die Positionen von mindestens zwei Benutzern (12a, 12c) definiert, nur aus dem Menü zur Eingabe von Information bezüglich des Abstands (5) besteht.

6. Verfahren nach Anspruch 1, **dadurch gekennzeichnet, dass** das Menü zur Eingabe der Information, die die Positionen (4, 6) von mindestens zwei Benutzern (12a, 12c) definiert, aus dem Menü zur Eingabe von Information bezüglich des Abstands (5) und der Position (2) besteht.

7. Verfahren nach Anspruch 1, **dadurch gekennzeichnet, dass** das Menü zur Eingabe der Information, die die Positionen (4, 6) von mindestens zwei Benutzern (12a, 12c) definiert, mehr als ein Menü zur Eingabe von Information bezüglich der Position (2) umfasst.

## Revendications

1. Procédé de commande automatique des paramètres vidéo et/ou audio d'un système vidéo qui est commandé par une télécommande et comprend au moins une sortie audio, selon les positions d'au moins deux utilisateurs (12a, 12c), **caractérisé en ce que**
- ledit système vidéo comprend un menu pour entrer des informations de position définissant lesdites positions (4, 6) au moyen de la télécommande (12a),
- le système vidéo reçoit (12b) les informations de position transmises par la télécommande et détermine les positions des utilisateurs (4, 6) par rapport au système vidéo,
- le système vidéo change les paramètres audio et/ou vidéo selon lesdites informations définissant lesdites positions (4, 6) desdits au moins deux utilisateurs (12a, 12c), dont les positions sont détectées au moyen d'une règle basée sur la position, stockée dans une mémoire du système vidéo, de changement des paramètres audio/vidéo.

2. Procédé selon la revendication 1, **caractérisé en ce que** les informations de position pour plus d'un utilisateur sont transmises audit menu pour entrer des informations de position.

3. Procédé selon la revendication 1, **caractérisé en ce que** ladite règle basée sur la position de changement des paramètres audio/vidéo est déterminée au préalable par le fabricant.

4. Procédé selon la revendication 1, **caractérisé en ce que** ladite règle basée sur la position de changement des paramètres audio/vidéo est déterminée par l'utilisateur.

5. Procédé selon la revendication 1, **caractérisé en ce que** ledit menu pour entrer les informations définissant lesdites positions desdits au moins deux utilisateurs (12a, 12c) n'est composé que du menu permettant d'entrer des informations de distance (5).

6. Procédé selon la revendication 1, **caractérisé en ce que** ledit menu pour entrer lesdites informations définissant lesdites positions (4, 6) desdits au moins deux utilisateurs (12a, 12c) est composé du menu permettant d'entrer des informations de distance (5) et de position (2).

7. Procédé selon la revendication 1, **caractérisé en ce que** ledit menu pour entrer lesdites informations définissant lesdites positions (4, 6) desdits au moins deux utilisateurs (12a, 12c) comprend plus d'un menu permettant d'entrer des informations de position (2).
